# EUROPÄISCHE PATENTSCHRIFT

(11) **EP 3 934 400 B1**
(45) Veröffentlichungstag und Bekanntmachung des Hinweises auf die Patenterteilung: **12.04.2023**
(21) Anmeldenummer: 21181305.0
(22) Anmeldetag: 24.06.2021
(51) Int. Cl.: H05K 7/20, B60T 17/02, B60T 8/36

(54) **PUMPENAGGREGAT MIT WÄRMELEITFÄHIGEM MATERIAL AUF EINER FOLIENSCHICHT**
PUMP UNIT WITH THERMALLY CONDUCTIVE MATERIAL ON A FILM LAYER
MODULE DE POMPE POURVU DE MATIÈRE THERMOCONDUCTRICE SUR UNE COUCHE DE FILM

(30) Priorität: 03.07.2020 DE 102020208376
(43) Veröffentlichungstag der Anmeldung: 05.01.2022
(73) Patentinhaber: Continental Automotive Technologies GmbH, 30165 Hannover (DE)
(72) Erfinder: Gilb, Jürgen, 60488 Frankfurt am Main (DE); Scheffel, Robert, 60488 Frankfurt am Main (DE)
(74) Vertreter: Continental Corporation

(56) Entgegenhaltungen:
- CN-A- 110 636 746
- DE-A1-102007 001 733
- DE-C1- 19 756 186
- US-A- 3 586 102
- US-A1- 2008 017 174
- US-A1- 2013 033 823
- US-A1- 2018 303 009

## Beschreibung

Die Erfindung betrifft ein Pumpenaggregat für eine Kraftfahrzeugbremsanlage gemäß dem Oberbegriff von Anspruch 1.

Ein gängiges Pumpenaggregat für die Bremsanlage eines Kraftfahrzeuges umfasst eine Hydraulikeinheit und eine Elektronikeinheit. Ein solches ist bspw. aus der DE 197 09 740 A1 bekannt. Die Hydraulikeinheit umfasst eine Kolbenpumpe und Steuerungsventile. Die Elektronikeinheit umfasst eine Leiterplatte und Elektromagneten zur Ansteuerung der Steuerungsventile in der Hydraulikeinheit. Hierfür ist die Elektronikeinheit an der Hydraulikeinheit angeordnet. Die Elektronikeinheit umfasst zudem einen Elektromotor, dessen Welle in die Hydraulikeinheit hineinragt, um die Kolben der Pumpe anzutreiben. DE 197 56 186 C1, US 2008/017174 A1 und DE 10 2007 001733 A1 offenbaren ein Motor-Pumpenaggregat, mit Mitteln zur Kühlung der elektronischen Bauelementen.

Im Betrieb erwärmen sich die elektronischen Bauelemente der Leiterplatte. Daher gilt es diese zu kühlen. Zur Kühlung der elektronischen Bauelementen wird ein sogenanntes "thermal interface material" appliziert. Als solches wird bspw. die Oberfläche eines Bauelements mit einer Wärmeleitpaste benetzt, wobei ein Kühlkörper zur Wärmeabfuhr an dem Bauelement anliegt. Als Kühlkörper wird bspw. der Kolbentopf der Kolbenpumpe verwendet.

Wärmeleitpaste ist eine Paste, welche die Wärmeübertragung zwischen zwei Bauteilen verbessert. Die Kühlflächen von Kühlkörpern enthalten durch mechanische Bearbeitung stets mehr oder weniger tiefe Riefen, Rillen, Erhöhungen und Vertiefungen. Auch wenn diese klein sind, hemmen die entstehenden Hohlräume die Wärmeübertragung durch die Verkleinerung der wirksamen Fläche. Dasselbe gilt für das zu kühlende Bauteil. Prozessoren tragen z.B. oft eine Beschriftung, die zu Vertiefungen führen. Wärmeleitpasten füllen diese Unebenheiten auf und ermöglichen somit eine bessere Wärmeübertragung vom Bauteil zum Kühlkörper. Sie sind im Gegensatz zu manchen Arten von Wärmeleitpads nicht dafür gedacht oder geeignet, größere Abstände zwischen Wärmequelle und Kühlkörper zu überbrücken.

Ein Wärmeleitpad dient ähnlich wie Wärmeleitpaste der besseren Ableitung der Verlustwärme elektronischer Bauteile. Um Lufträume zu vermeiden, welche Aufgrund der Unebenheiten der anliegenden Flächen entstehen und dadurch den Wärmeübergang behindern, werden Wärmeleitpads verwendet, welche die Luft aus diesen Zwischenräumen verdrängen und somit den Wärmeübergang verbessern. Bei Druck verformen sich die Pads permanent, passen sich flexibel der Oberflächenstruktur an und springen nicht in ihre Form zurück. Gleichzeitig sind sie selbsthaftend, was die Montage erleichtert.

Des Weiteren werden auch Wärmeleitkleber verwendet, welche bspw. zur Montage von Kühlkörpern dienen. Gegenüber Wärmeleitpaste ist die spezifische Wärmeleitfähigkeit in der Regel geringer. Hinzu kommt die meist erforderliche größere Schichtdicke. Zur zerstörungsfreien Demontage geklebten Bauteile muss jedoch meist die Klebeverbindung vorher geschwächt werden. Dies kann durch Erwärmen erfolgen. Solch ein Vorrang ist in der Produktion allerdings unvorteilhaft und kostenintensiv.

Aufgrund von chemischen Vorgängen und der Aushärtung des thermischen Materials, kann eine nachträgliche Trennung des Kühlkörpers von dem Bauelement also nur mit erheblichem Aufwand erfolgen. Für eine erneute Verwendung von Kühlkörper und/oder Bauelement ist eine erneute Applizierung des thermischen Materials notwendig. Daher bedarf es zunächst einer rückstandslosen Entfernung des ausgehärteten thermischen Altmaterials. Dies ist nur durch eine mechanische Bearbeitung möglich und kann zur Beschädigung der Bauteile. Daher werden in der Serienproduktion die Bauteile nicht für eine erneute Verwendung aufbereitet, sondern der Verschrottung zugeführt.

Es ist daher Aufgabe der Erfindung ein Pumpenaggregat für eine Kraftfahrzeugbremsanlage bereitzustellen, bei welchem das Entfernen von einem thermisch leitfähigen Material vereinfacht ist.

Erfindungsgemäß wird ein Pumpenaggregat für eine Kraftfahrzeugbremsanlage bereitgestellt, umfassend eine Hydraulikeinheit und eine daran angeordnete Elektronikeinheit, wobei die Elektronikeinheit eine Leiterplatte mit einer Vielzahl an elektronischen Bauelementen umfasst, wobei zur Kühlung zumindest eines der Bauelemente ein Kühlkörper vorgesehen ist, wobei eine thermisch leitfähige Schicht zwischen dem Bauelement und dem Kühlkörper vorgesehen ist, wobei die thermisch leitfähige Schicht auf einer Folienschicht aufgetragen ist, welche wiederum auf dem Bauelement oder dem Kühlkörper angebracht ist.

Um das Auftragen eines neuen thermisch leitfähigen Materials zu vereinfachen, wird das alte bereits ausgehärtete Material einfach durch die Folienschicht von dem Bauelement oder dem Kühlkörper abgezogen. Die Folienschicht ist zuvor Folienschicht zwischen die zu benetzenden Flächen von Bauelement und Kühlkörper angeordnet werden. Sie ist selbstklebend und reißfest. Wird sie abgezogen, verbleiben keine Rückstände von thermisch leitfähigem Material auf dem Element, an welchem die Folienschicht aufgebracht wurde. Dadurch muss die Oberfläche dieses Elements nicht nachbehandelt werden.

Bevorzugt ist die Folienschicht lösbar von dem Bauelement oder dem Kühlkörper angebracht. Dadurch ist es möglich die Komponenten nachträglich voneinander zu entfernen und anschließend eine neue Folienschicht mit neuem wärmeleitfähigem Material aufzubringen. Dieser Vorgang kann beliebig oft widerholt werden. Dadurch werden in der Produktion Schrottkosten vermieden und die Umwelt wird dadurch geschont, dass technische Komponenten Wiederverwendung finden.

Nach einer bevorzugten Ausführungsform ist die Folienschicht aus einem Polymermaterial hergestellt. Die Materialwahl der Folie ist an die jeweiligen Anforderungen bzw. an die abzuführende Verlustleistung anzupassen. Dadurch kann der thermische Widerstand angepasst werden, sodass der thermische Einfluss der zusätzlichen Folie auf den kompletten Kühlpfad minimiert wird.

Gemäß einer weiteren bevorzugten Ausführungsform umfasst die Folienschicht eine Lasche zum Abziehen, welche nicht mit der thermisch leitfähigen Schicht beschichtet ist. Dies vereinfacht das Entfernen der Folienschicht.

Eine weitere bevorzugte Ausführungsform sieht vor, dass der Kühlkörper zumindest teilweise in der Hydraulikeinheit aufgenommen ist. Vorzugsweise ist der der Kühlkörper ein Kolbentopf einer Pumpe, welche in der Hydraulikeinheit aufgenommen ist. Hierbei wird der Kolbentop als Kühlkörper bevorzugt aus einem Metall hergestellt. So findet das vorgeschlagene Pumpenaggregat verwendet in einer Bremsanlage eines Kraftfahrzeugs.

Das vorgeschlagene Anwenden einer Folienschicht als Trennfolie lässt sich auch bei anderen pastösartigen Materialien wie Formdichtungen anwenden.

Weitere bevorzugte Ausführungsformen der Erfindung ergeben sich aus der nachfolgenden Beschreibung eines Ausführungsbeispiels an Hand der Figur.

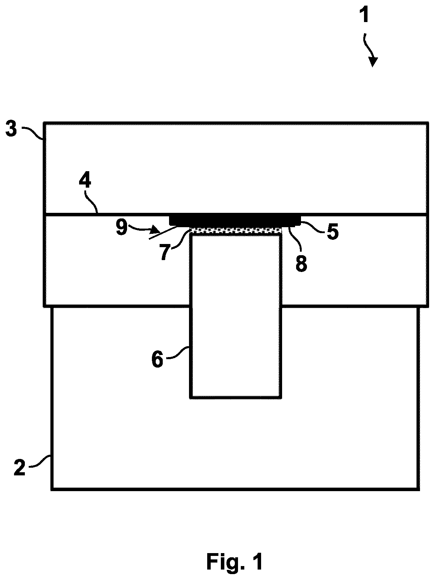

Es zeigt
- Fig.1: ein beispielsgemäßes Pumpenaggregat.

Die Ausgestaltung eines Pumpenaggregats 1 ist hier nur schematisch gezeigt. Als solches umfasst Pumpenaggregat 1 eine Hydraulikeinheit 2 und eine Elektronikeinheit 3. Hydraulikeinheit 2 ist in der Regel ein quaderförmiger Metallblock, in welchem mehrere Bohrungen eingebracht sind. Die (nicht gezeigten) Bohrungen dienen z. B. als Laufbuchsen für die Pumpenkolben einer Pumpe. In den Laufbuchsen der Pumpe ist jeweils ein Kolbentopf angeordnet, welcher zugleich als Kühlkörper verwendet wird. Weitere Bohrungen bilden Kanäle, die von der Pumpe zu Steuerventilen laufen und von dort zu Anschlüssen für Bremsleitungen, um das Druckmittel zu den jeweiligen Radbremsen fördern zu können. Die Ausgestaltung der Hydraulikeinheit ist hier nur schematisch gezeigt.

An einer Seite der Hydraulikeinheit 2 ist Elektronikeinheit 3 angeordnet. Diese umfasst (nicht gezeigt) einen Elektromotor und mehrere Elektromagnete. Die Motorwelle des Elektromotors geht über in einen Exzenter in Hydraulikeinheit 2 und treibt dort die Pumpenkolben an. Die Elektromagnete sind um den Elektromotor angeordnet. An der Oberseite des Elektromotors ist eine Leiterplatte 4 angeordnet.

Das System aus Elektromotor, Elektromagneten sowie Leiterplatte 4 ist von einer Gehäusekappe aus Kunststoff umgeben, deren Rand auf Hydraulikeinheit 2 aufsitzt und mit dieser über Schrauben verbunden ist.

Leiterplatte 4 ist mit einer Vielzahl an elektronischen Bauelementen 5 versehen, welche als solche im Betrieb der Kühlung bedürfen. Durch die kompakte Bauweise von Pumpenaggregats 1 kann als Kühlkörper 6 Kolbentopf verwendet werden. Der aus einem Metall hergestellte Kühlkörper 6 weist eine im Wesentlichen plane Fläche auf, welche in Kontakt mit zumindest einem Bauelement 5 der Leiterplatte 4 steht, um die vom Bauelement 5 erzeugte Wärme durch Wärmeübertragung abzuführen. Als Material für Kühlkörper 6 kommen vor allem Kupfer und Aluminium bzw. aus diesen hergestellten Legierungen in Betracht. Aber auch ein Kunststoffmaterial mit entsprechender Wärmeabfuhr ist vorstellbar. Damit der Wärmeübergang von Bauelement 5 auf Kühlkörper verbessert wird, werden die korrespondieren Flächen in der Regel mit einem thermisch leitfähigen Material 7, wie bspw. Wärmeleitpaste, benetzt.

Solch ein thermisch leitfähiges Material 7 hat allerdings den Nachteil, dass es sich nicht ohne Weiteres rückstandslos entfernen lässt. Thermisch leitfähiges Material 7 härtet im Betrieb aus und geht mit den Oberflächen eine chemische Verbindung ein. Sollen Bauelement 5 und/oder Kühlkörper 6 wiederverwendet werden, müssen deren Oberflächen zunächst aufwendig behandelt und aufbereitet werden. So muss altes thermisch leitfähiges Material 7 zunächst "abgekratzt" werden und die Oberfläche von Kühlkörper 6 muss poliert werden.

Um diese umständliche Aufbereitung zu verhindern und in der Produktion Taktzeiten zu verkürzen, wird beispielsgemäß eine Folienschicht 8 zwischen Bauelement 5 und Kühlkörper 6 vorgesehen. Folienschicht 8 ist eine dünne Trennfolie, bspw. aus einem Polymermaterial, welche selbstklebend entweder auf Bauelement 5 oder auf Kühlkörper 6 aufgebracht wird. Auf die jeweils andere Seite wird dann das thermisch leitfähige Material 5 appliziert, welches dann entsprechend Kühlkörper 6 oder Bauelement 5 flächig benetzt. Auch für das Material der Folienschicht 8 gilt, dass bestmöglich Wärmeleitfähig sein sollte. So kommen bspw. auch Alufolien in Betracht.

Als wesentliche Eigenschaft sollte Folienschicht 8 reißfest ausgestaltet sein. So ist nämlich eine Lasche 9 vorgesehen, mittels welcher sich Folienschicht 8 abziehen lässt. Lasche 9 ist weder mit thermisch leitfähigen Material 7 noch einem Haftmittel versehen. Durch das Vorsehen einer Folienschicht 8 mit einer Abziehlasche 9, welche zwischen thermisch leitfähiges Material 7 und das zu kühlende Element 5 oder 6 angeordnet wird, ist ein rückstandloses Entfernen des thermisch leitfähigen Materials 7 ermöglicht worden. Dadurch können Bauteile wie Bauelement 5 bzw. Leiterplatte 4 oder auch Kühlkörper 6 direkt wiederverwendet werden, ohne aufwendig aufbereitet werden zu müssen. Dadurch senken sich die Ausschusskosten und die Taktzeiten im Montageprozess.

### Bezugszeichenliste

- 1: Pumpenaggregat
- 2: Hydraulikeinheit
- 3: Elektronikeinheit
- 4: Leiterplatte
- 5: Bauelement
- 6: Kühlkörper
- 7: thermisch leitfähige Schicht
- 8: Folienschicht
- 9: Lasche

## Patentansprüche

1. Pumpenaggregat (1) für eine Kraftfahrzeugbremsanlage, umfassend eine Hydraulikeinheit (2) und eine daran angeordnete Elektronikeinheit (3), wobei die Elektronikeinheit (3) eine Leiterplatte (4) mit einer Vielzahl an elektronischen Bauelementen (5) umfasst, wobei zur Kühlung zumindest eines der Bauelemente (5) ein Kühlkörper (6) vorgesehen ist, wobei eine thermisch leitfähige Schicht (7) zwischen dem Bauelement (5) und dem Kühlkörper (6) vorgesehen ist, **dadurch gekennzeichnet, dass** die thermisch leitfähige Schicht (7) auf einer Folienschicht (8) aufgetragen ist, welche wiederum auf dem Bauelement (5) oder dem Kühlkörper (6) angebracht ist.

2. Pumpenaggregat (1) nach Anspruch 1, **dadurch gekennzeichnet, dass** die Folienschicht (8) lösbar von dem Bauelement (5) oder dem Kühlkörper (6) angebracht ist.

3. Pumpenaggregat (1) nach Anspruch 1 oder 2, **dadurch gekennzeichnet, dass** die Folienschicht (8) selbstklebend ist.

4. Pumpenaggregat (1) nach einem der Ansprüche 1 bis 3, **dadurch gekennzeichnet, dass** die Folienschicht (8) aus einem Polymermaterial hergestellt ist.

5. Pumpenaggregat (1) nach einem der Ansprüche 1 bis 4, **dadurch gekennzeichnet, dass** die Folienschicht (8) eine Lasche (9) zum Abziehen umfasst, welche nicht mit der thermisch leitfähigen Schicht (7) beschichtet ist.

6. Pumpenaggregat (1) nach einem der Ansprüche 1 bis 5, **dadurch gekennzeichnet, dass** der Kühlkörper (6) zumindest teilweise in der Hydraulikeinheit (2) aufgenommen ist.

7. Pumpenaggregat (1) nach einem der Ansprüche 1 bis 6, **dadurch gekennzeichnet, dass** der Kühlkörper (6) ein Kolbentopf einer Pumpe ist, welche in der Hydraulikeinheit (2) aufgenommen ist.

8. Pumpenaggregat (1) nach einem der Ansprüche 1 bis 7, **dadurch gekennzeichnet, dass** der Kühlkörper (6) aus einem Metall hergestellt ist.

9. Kraftfahrzeug umfassend ein Pumpenaggregat (1) nach einem der vorangehenden Ansprüche.

## Claims

1. Pump unit (1) for a motor vehicle brake system, comprising a hydraulic unit (2) and an electronics unit (3) arranged thereon, wherein the electronics unit (3) comprises a circuit board (4) with a multiplicity of electronic components (5), wherein a cooling element (6) is provided to cool at least one of the components (5), wherein a thermally conductive layer (7) is provided between the component (5) and the cooling element (6), **characterized in that** the thermally conductive layer (7) is deposited on a film layer (8), which in turn is applied to the component (5) or the cooling element (6).

2. Pump unit (1) according to Claim 1, **characterized in that** the film layer (8) is applied so as to be detachable from the component (5) or the cooling element (6).

3. Pump unit (1) according to Claim 1 or 2, **characterized in that** the film layer (8) is self-adhesive.

4. Pump unit (1) according to one of Claims 1 to 3, **characterized in that** the film layer (8) is produced from a polymer material.

5. Pump unit (1) according to one of Claims 1 to 4, **characterized in that** the film layer (8) has a pulling-off tab (9) which is not coated with the thermally conductive layer (7).

6. Pump unit (1) according to one of Claims 1 to 5, **characterized in that** the cooling element (6) is at least partially received in the hydraulic unit (2).

7. Pump unit (1) according to one of Claims 1 to 6, **characterized in that** the cooling element (6) is a piston pot of a pump, which is received in the hydraulic unit (2).

8. Pump unit (1) according to one of Claims 1 to 7, **characterized in that** the cooling element (6) is produced from a metal.

9. Motor vehicle comprising a pump unit (1) according to one of the preceding claims.

## Revendications

1. Ensemble de pompe (1) pour un système de freinage de véhicule automobile, comprenant une unité hydraulique (2) et une unité électronique (3) agencée sur celle-ci, l'unité électronique (3) comprenant une carte de circuit imprimé (4) avec une pluralité de composants électroniques (5), un corps de refroidissement (6) étant prévu pour refroidir au moins l'un des composants (5), une couche thermiquement conductrice (7) étant prévue entre le composant (5) et le corps de refroidissement (6), **caractérisé en ce que** la couche thermiquement conductrice (7) est appliquée sur une couche de film (8), qui est à son tour disposée sur le composant (5) ou le corps de refroidissement (6).

2. Ensemble de pompe (1) selon la revendication 1, **caractérisé en ce que** la couche de film (8) est disposée de manière à pouvoir être enlevée du composant (5) ou du corps de refroidissement (6).

3. Ensemble de pompe (1) selon la revendication 1 ou 2, **caractérisé en ce que** la couche de film (8) est autocollante.

4. Ensemble de pompe (1) selon l'une quelconque des revendications 1 à 3, **caractérisé en ce que** la couche de film (8) est fabriquée en un matériau polymère.

5. Ensemble de pompe (1) selon l'une quelconque des revendications 1 à 4, **caractérisé en ce que** la couche de film (8) comprend une languette (9) pour le retrait, qui n'est pas revêtue de la couche thermiquement conductrice (7).

6. Ensemble de pompe (1) selon l'une quelconque des revendications 1 à 5, **caractérisé en ce que** le corps de refroidissement (6) est logé au moins partiellement dans l'unité hydraulique (2).

7. Ensemble de pompe (1) selon l'une quelconque des revendications 1 à 6, **caractérisé en ce que** le corps de refroidissement (6) est un pot de piston d'une pompe qui est logée dans l'unité hydraulique (2).

8. Ensemble de pompe (1) selon l'une quelconque des revendications 1 à 7, **caractérisé en ce que** le corps de refroidissement (6) est fabriqué en un métal.

9. Véhicule automobile comprenant un ensemble de pompe (1) selon l'une quelconque des revendications précédentes.
